# EUROPÄISCHE PATENTSCHRIFT

(11) **EP 2 921 757 B1**
(45) Veröffentlichungstag und Bekanntmachung des Hinweises auf die Patenterteilung: **11.04.2018**
(21) Anmeldenummer: 14199964.9
(22) Anmeldetag: 23.12.2014
(51) Int. Cl.: F16L 23/08, F16B 2/08

(54) **Profilschelle**
Profiled clamp
Collier profilé

(30) Priorität: 18.03.2014 DE 102014103683
(43) Veröffentlichungstag der Anmeldung: 23.09.2015
(73) Patentinhaber: NORMA Germany GmbH, 63477 Maintal (DE)
(72) Erfinder: Baudoin, Manuel, Newsbury, RG147QD (GB); Breideband, Linda, 60954 Frankfurt (DE); Von Breitenbach, Gerrit, 63791 Karlstein (DE); Geppert, Helmut, 63791 Karlstein (DE); Legel, Thomas, 63110 Rodgau (DE)
(74) Vertreter: Patentanwälte Olbricht Buchhold Keulertz

(56) Entgegenhaltungen:
- EP-A1- 2 690 338
- WO-A1-2014/016721

## Beschreibung

Die Erfindung betrifft eine Profilschelle mit einem ringförmigen Schellenband, das zwei Umfangsenden mit jeweils einem Spannkopf und an seinen axialen Enden radial nach innen geneigte Flanken aufweist, wobei die Spannköpfe durch eine Spanneinrichtung miteinander verbunden sind und mindestens ein Spannkopf eine Kopfkontaktlasche aufweist, die radial über den Spannkopf vorsteht.

Eine derartige Profilschelle ist beispielsweise aus DE 10 2012 009 256 A1 bekannt.

Eine Profilschelle wird vielfach dazu verwendet, eine so genannte "Kegelflanschverbindung" herzustellen. Bei einer Kegelflanschverbindung weisen zwei zu verbindende Bauelemente an ihren benachbarten Enden jeweils Kegelflansche auf, deren Rückseite geneigt ist. Die Profilschelle wird dann so um die aneinander anliegenden Kegelflansche gelegt, dass die Flanken auf die Rückseiten der Kegelflansche wirken können. Wenn die Spanneinrichtung betätigt wird und den Durchmesser des Schellenbandes verkleinert, dann wirken die Flanken nach dem Prinzip der schiefen Ebene auf die Rückseiten der Flansche und erzeugen dadurch eine Axialkraft, die die beiden Bauelemente zusammenpresst und zusammenhält.

Es ist bekannt, bei einer derartigen Profilschelle die beiden Spannköpfe jeweils mit einer Kopfkontaktlasche zu versehen. Wenn die Profilschelle auf ihren Nenndurchmesser gespannt worden ist, dann liegen die beiden Kopfkontaktlaschen aneinander an und gewährleisten, vereinfacht ausgedrückt, dass die in Umfangsrichtung außenliegenden Flächen der Spannköpfe parallel zueinander stehen. Wenn die Spanneinrichtung als Schraubbolzen und Gewindemutter ausgebildet ist, dann wird durch diese Ausbildung sichergestellt, dass der größte Teil des Drehmoments zum Drehen des Gewindebolzens oder der Gewindemutter in eine Spannkraft umgesetzt wird.

Allerdings hat sich gezeigt, dass Streuungen beim eingesetzten Schrauben-Muttern-Getriebe unter ungünstigen Umständen eine zu große Spannkraft erzeugen. Dies ist beispielsweise der Fall, wenn die Schraube oder die Mutter durch einen Schmierstoff kontaminiert werden. Dann besteht das Risiko, dass sich die Kopfkontaktlaschen unerwünscht verformen. Dies führt zum einen zu einem unschönen Aussehen. Zum anderen besteht das Risiko, dass die Spannköpfe ihre parallele Ausrichtung zueinander verlieren, was sich unter Umständen negativ auf die Spannkraft und auf das Streuverhalten beziehungsweise die Varianz des Systems Profilschelle - Flansch auswirkt.

Auch WO 2014/016721 A1 zeigt eine derartige Profilschelle mit Spannköpfen, die beim Spannen der Schelle gegeneinander gedrückt werden. Die Spannköpfe weisen zusätzliche Stützflächen auf, die elliptisch um den Spannkopf ausgebildet sind.

Der Erfindung liegt die Aufgabe zugrunde, eine hohe Redundanz gegen Streuung beim Montieren der Profilschelle sicher zu stellen.

Diese Aufgabe wird bei einer Profilschelle der eingangs genannten Art dadurch gelöst, dass die Kopfkontaktlasche in Axialrichtung beidseitig über den Spannkopf vorsteht und in einem radial äußeren Bereich des Spannkopfes um den Spannkopf herum geführt ist. Erfindungsgemäß ist vorgesehen, dass die Kopfkontaktlasche über eine Biegelinie mit dem Spannkopf verbunden ist, die einen in Axialrichtung der Profilschelle verlaufenden Abschnitt und zwei senkrecht dazu abgewinkelte Abschnitte aufweist, wobei die Kopfkontaktlasche mit dem Spannkopf einstückig ausgebildet ist.

Mit einer derartigen Ausbildung wird erreicht, dass die Verbindung zwischen dem Spannkopf und der Kopfkontaktlasche relativ groß gemacht wird, d.h. eine Verbindungslinie zwischen der Kopfkontaktlasche und dem Spannkopf ist auf jeden Fall größer, als wenn die Kopfkontaktlasche nur über einen Teil der axialen Längen mit dem Spannkopf verbunden ist. Je länger diese Verbindungslinie ist, desto stärker ist der Widerstand gegen ein Verbiegen der Kopfkontaktlasche relativ zum Spannkopf. Damit kann eine hohe Toleranz des Systems aus Profilschelle und Flanschen gegen Varianzen sichergestellt werden.

Die Kopfkontaktlasche steht in Axialrichtung beidseitig über den Spannkopf vor. Damit wird die größtmögliche Länge der Verbindungslinie zwischen der Kopfkontaktlasche und dem Spannkopf erreicht.

Die Kopfkontaktlasche ist dabei in einem radial äußeren Bereich des Spannkopfes um den Spannkopf herum geführt. Damit wird die Biegelinie zwischen der Kopfkontaktlasche und dem Spannkopf mit einer Richtungsänderung versehen. Eine derartige Richtungsänderung der Biegelinie oder des Übergangs über der Kopfkontaktlasche und dem Spannkopf ergibt einen deutlich höheren Verformungswiderstand, so dass das Verbiegen der Kopfkontaktlasche gegenüber dem Spannkopf weiter erschwert wird.

Vorzugsweise weist der Spannkopf eine Basis und eine von der Basis ausgehende, auf den anderen Spannkopf zu gerichtete Verstärkung mit radial verlaufenden Wandabschnitten auf, wobei die Kopfkontaktlasche über eine Biegelinie mit mindestens einem radialen Wandabschnitt verbunden ist. Die Kopfkontaktlasche erstreckt sich also radial nach innen und setzt sich dann in dem Wandabschnitt fort. Man kann den Spannkopf und die Kopfkontaktlasche aus einem einzigen Rohling heraus umformen. Durch die Verbindung der Kopfkontaktlasche mit dem radialen Wandabschnitt ergibt sich ein sehr hoher Verformungswiderstand.

Hierbei ist bevorzugt, dass die Kopfkontaktlasche im Bereich des radialen Wandabschnitts eine axiale Vergrößerung aufweist. Dies erhöht den Verformungswiderstand weiter.

Die Erfindung wird im Folgenden anhand eines bevorzugten Ausführungsbeispiels in Verbindung mit der Zeichnung beschrieben. Hierin zeigen:
- Fig. 1: eine Profilschelle in montiertem Zustand,
- Fig. 2: einen Schnitt 11-11 nach Fig. 1 und
- Fig. 3: eine erste Ausbildung einer Kopfkontaktlasche.

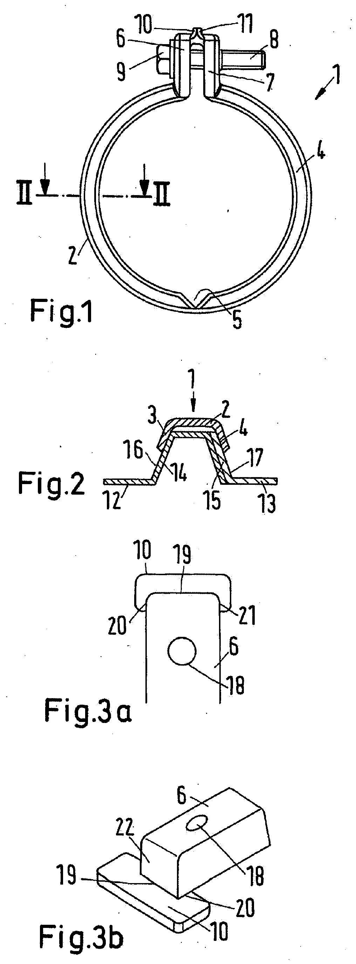

Eine Profilschelle 1 weist ein Schellenband 2 auf, das an seinen axialen Enden radial einwärts gerichtete Flanken 3, 4 aufweist. Die Flanken können, wie dies in Fig. 1 dargestellt ist, in Umfangsrichtung eine Unterbrechung 5 aufweisen, damit das Schellenband 2 aufgebogen werden kann. Es ist aber auch möglich das Schellenband 2 in Umfangsrichtung mehrteilig auszubilden.

Das Schellenband 2 weist an seinen beiden Umfangsenden jeweils einen Spannkopf 6, 7 auf. Eine Spanneinrichtung in Form einer Gewindeschraube 8 ist durch den Spannkopf 6 hindurchgeführt und in ein Gewinde am anderen Spannkopf 7 eingeschraubt. Es ist natürlich auch möglich, eine Gewindemutter auf das aus dem Spannkopf 7 hervorstehende Ende der Gewindeschraube 8 aufzuschrauben. Die Gewindeschraube 8 weist einen Kopf 9 auf, der im gespannten Zustand, der in Fig. 1 dargestellt ist, an der Außenseite (in Umfangsrichtung) des Spannkopfes 6 anliegt.

Jeder Spannkopf 6, 7 weist eine Kopfkontaktlasche 10, 11 auf. Die beiden Kopfkontaktlaschen 10, 11 liegen im gespannten Zustand der Profilschelle aneinander an. Sie sind dabei so ausgebildet, dass für den Nenndurchmesser im gespannten Zustand die Außenseite der Spannköpfe 6, 7 in Umfangsrichtung parallel zueinander verlaufen, so dass beispielsweise der Kopf 9 plan auf der Außenseite des Spannkopfes 6 aufliegt. Gleiches würde für eine auf die Gewindeschraube 8 aufgeschraubte Gewindemutter gelten.

Eine derartige Profilschelle 1 wird verwendet, um eine in Fig. 2 dargestellte Kegelflanschverbindung zu bilden. Bei einer Kegelflanschverbindung haben zwei miteinander zu verbindende Bauteile, beispielsweise Rohre 12, 13, an den miteinander zu verbindenden Enden jeweils einen radial nach außen gerichteten Vorsprung 14, 15. Die Vorsprünge 14, 15 haben auf ihren voneinander weg weisenden Rückseiten eine kegelförmig geneigte Anlagefläche 16, 17. Wenn die Profilschelle 1 montiert wird, dann kommen die Flanken 3, 4 an den Anlageflächen 16, 17 zur Anlage. Wenn die Profilschelle 1 gespannt wird, dann vermindert das Schellenband 2 seinen Durchmesser, so dass die Flanken 3, 4 radial nach innen gezogen werden und somit eine axial wirkende Kraft auf die Anlageflächen 16, 17 ausbilden. Dementsprechend werden die beiden Vorsprünge 14, 15 mit einer vorbestimmten Spannkraft gegeneinander gehalten.

In einer anderen Ausgestaltung können die Vorsprünge 14, 15 massiv ausgebildet und an ihren einander 45 zugewandten Stirnseiten senkrecht zu einer Achse der Rohre 12, 13 ausgerichtet sein. Die Wirkung der Profilschelle 1 ist hier entsprechend.

Wenn der in Fig. 1 dargestellte Zustand erreicht ist, sollte ein Monteur die Gewindeschraube 8 nicht mehr weiterdrehen. Dies würde die Gefahr beinhalten, dass sich die Kopfkontaktlaschen 10, 11 verformen und insbesondere ihre Ausrichtung gegenüber den Spannköpfen 6, 7 ändern.

Um eine derartige Verformung zu verhindern oder zumindest zu erschweren, haben die Kopfkontaktlaschen 10, 11 eine Form, die im Folgenden am Beispiel der Kopfkontaktlasche 10 beschrieben wird. Die Kopfkontaktlasche 11 kann in gleicher Weise ausgebildet sein.

Fig. 3a zeigt die Kopfkontaktlasche 10 am Spannkopf 6. Der Spannkopf 6 hat eine Öffnung 18, durch die die Gewindeschraube 8 geführt werden kann.

Wie man in Fig. 3 a und Fig. 3b erkennen kann, steht die Kopfkontaktlasche 10 in Axialrichtung beidseitig über den Spannkopf 6 vor. Sie ist in einem radial äußeren Bereich des Spannkopfes 6 um den Spannkopf 6 herum geführt. Die Kopfkontaktlasche 10 ist mit dem Spannkopf 6 einstückig ausgebildet, d.h. wenn der Spannkopf 6 durch einen Umformvorgang aus einem Blechrohling hergestellt wird, dann wird die Kopfkontaktlasche 10 gleich mit gebildet.

Die Kopfkontaktlasche 10 ist mit dem Spannkopf 6 über eine Biegelinie 19 verbunden. Diese Biegelinie 19 ist nicht mehr gerade, sondern weist im Bereich der axialen Enden des Spannkopfes 6 Abschnitte 20, 21 auf, die nicht mehr in Axialrichtung der Profilschelle 1 verlaufen, sondern senkrecht dazu. Die Abschnitte 20, 21 haben in diesem Ausführungsbeispiel eine Erstreckung in radiale Richtung, die dem ein- bis zweifachen der Dicke einer radialen Stirnwand 22 des Spannkopfes 6 entspricht.

Durch die abgewinkelten Abschnitte 20, 21 der Biegelinie 19 ergibt sich ein sehr großer Verformungswiderstand, d.h. die Kraft, die man zum Verbiegen der Kopfkontaktlaschen 10 gegenüber dem Spannkopf 6 benötigen würde, hat sich sehr stark vergrößert, so dass das Risiko, dass die Kopfkontaktlasche 10 gegenüber dem Spannkopf 6 verbogen wird deutlich verringert worden ist gegenüber einem Zustand, bei dem die Kopfkontaktlasche 10 gegenüber der Stirnwand 22 abgewinkelt ist und nicht über die axiale Erstreckung der Stirnwand 22 übersteht.

Dargestellt ist eine Profilschelle 1, bei der beide Spannköpfe 6, 7 mit einer Kopfkontaktlasche 10, 11 versehen sind. Dies ist jedoch nicht unbedingt erforderlich. Man kann die beiden Spannköpfe 6, 7 auch unterschiedlich ausbilden, so dass eine Kopfkontaktlasche 10 des einen Spannkopfes 6 unmittelbar am anderen Spannkopf 7 anliegt.

## Patentansprüche

1. Profilschelle (1) mit einem ringförmigen Schellenband (2), das zwei Umfangsenden mit jeweils einem Spannkopf (6, 7) und an seinen axialen Enden radial nach innen geneigte Flanken (3, 4) aufweist, wobei die Spannköpfe (6, 7) durch eine Spanneinrichtung (8) miteinander verbunden sind und mindestens ein Spannkopf (6, 7) eine Kopfkontaktlasche (10, 11) aufweist, die radial über den Spannkopf (6, 7) vorsteht, wobei die Kopfkontaktlasche (10, 11) in Axialrichtung beidseitig über den Spannkopf (6, 7) vorsteht und in einem radial äußeren Bereich des Spannkopfes (6, 7) um den Spannkopf (6, 7) herum geführt ist, wobei die Kopfkontaktlasche (10, 11) mit dem Spannkopf (6, 7) einstückig ausgebildet ist,
**dadurch gekennzeichnet, dass** die Kopfkontaktlasche (10, 11) über eine Biegelinie (19) mit dem Spannkopf (6, 7) verbunden ist, die einen in Axialrichtung der Profilschelle verlaufenden Abschnitt und zwei senkrecht dazu abgewinkelte Abschnitte (20, 21) aufweist.

2. Profilschelle nach einem der Ansprüche 1, **dadurch gekennzeichnet, dass** der Spannkopf (6, 7) eine Basis und eine von der Basis ausgehende, auf den anderen Spannkopf (6, 7) zu gerichtete Verstärkung mit radial verlaufenden Wandabschnitten aufweist, wobei die Kopfkontaktlasche (10, 11) über die Biegelinie (19) mit mindestens einem radialen Wandabschnitt verbunden ist.

3. Profilschelle nach Anspruch 2, **dadurch gekennzeichnet, dass** die Kopfkontaktlasche (10, 11) im Bereich des radialen Wandabschnitts eine axiale Vergrößerung aufweist.

## Claims

1. Profile clamp (1) having an annular clamping band (2) that comprises two circumferential ends having respectively one tensioning head (6, 7) and, at its axial ends, flanks (3, 4) sloped radially inwards, wherein the tensioning heads (6, 7) are connected to one another by a tensioning device (8) and at least one tensioning head (6, 7) comprises a head contact tab (10, 11) that projects radially past the tensioning head (6, 7), wherein the head contact tab (10, 11) projects past the tensioning head (6, 7) on both sides in an axial direction and is led around the tensioning head (6, 7) in a radially outer region of the tensioning head (6, 7), wherein the head contact tab (10, 11) is integrally formed with the tensioning head (6, 7),
**characterized in that** the head contact tab (10, 11) is connected to the tensioning head (6, 7) via a bend line (19) that comprises a section extending in an axial direction of the profile clamp and two sections (20, 21) bent perpendicularly thereto.

2. Profile clamp according to any of claims 1, **characterised in that** the tensioning head (6, 7) comprises a base and a reinforcement comprising radially extending wall sections and emanating from the base and directed towards the other tensioning head (6, 7), wherein the head contact tab (10, 11) is connected to at least one radial wall section via the bend line (19).

3. Profile clamp according to claim 2, **characterised in that** the head contact tab (10, 11) comprises an axial enlargement in the region of the radial wall section.

## Revendications

1. Collier profilé (1) avec un ruban de collier annulaire (2), qui présente deux extrémités périphériques avec respectivement une tête de serrage (6, 7) et des flancs (3, 4) inclinés vers l'intérieur radialement sur ses extrémités axiales, dans lequel les têtes de serrage (6, 7) sont reliées l'une à l'autre par un dispositif de serrage (8) et au moins une tête de serrage (6, 7) présente une éclisse de contact de tête (10, 11), qui fait saillie radialement au-dessus de la tête de serrage (6, 7), dans lequel l'éclisse de contact de tête (10, 11) fait saillie dans la direction axiale des deux côtés au-dessus de la tête de serrage (6, 7) et est guidée dans une zone radialement externe de la tête de serrage (6, 7) autour de la tête de serrage (6, 7), dans lequel l'éclisse de contact de tête (10, 11) est formée d'un seul tenant avec la tête de serrage (6, 7),
**caractérisé en ce que** l'éclisse de contact de tête (10, 11) est reliée à la tête de serrage (6, 7) via une ligne de flexion (19), qui présente une section s'étendant dans la direction axiale du collier profilé et deux sections (20, 21) coudées perpendiculairement à celui-ci.

2. Collier profilé selon l'une quelconque des revendications 1, **caractérisé en ce que** la tête de serrage (6, 7) présente une base et un épaississement partant de la base et dirigé sur l'autre tête de serrage (6, 7) avec des sections de paroi qui s'étendent radialement, dans lequel l'éclisse de contact de tête (10, 11) est reliée à au moins une section de paroi radiale via la ligne de flexion (19).

3. Collier profilé selon la revendication 2, **caractérisé en ce que** l'éclisse de contact de tête (10, 11) présente un grossissement axial dans la zone de la section de paroi radiale.
